# EUROPEAN PATENT APPLICATION

(11) **EP 4 741 692 A1**
(43) Date of publication of application: **13.05.2026**
(21) Application number: 24835045.6
(22) Date of filing: 02.02.2024
(51) Int. Cl.: F16K 11/10

(54) **ENERGY-SAVING ENGINE OIL CONTROL VALVE CAPABLE OF ACHIEVING ENGINE OIL INTERNAL CIRCULATION AND ENGINE SYSTEM**

(30) Priority: 06.07.2023 CN 202310823461
(71) Applicant: Chongqing Changan Automobile Co., Ltd., Chongqing 400023 (CN)
(72) Inventor: XIE, Zongrang, Chongqing 400023 (CN); LIN, Han, Chongqing 400023 (CN); ZHOU, Jingqiao, Chongqing 400023 (CN); YAN, Zhen, Chongqing 400023 (CN)
(74) Representative: Barker Brettell LLP
(86) International application number: PCT/CN2024/075600
(87) International publication number: WO 2025/007558

(57) **Abstract**

Disclosed is an energy-saving engine oil control valve with internal engine oil circulation including a housing(1), a valve body (2) and a piston (3), which are all hollow structures; the housing (1) is radially provided with a first working oil hole (12) and a second working oil hole (13); the valve body (2) is fixedly mounted in the housing (1), an annular check valve (5) is mounted in the valve body (2), the piston (3) is slidably mounted in the valve body (2), and the piston (3) includes a first state and a second state; it can solve the problems of high manufacturing cost and assembly difficulty, low durability and reliability of parts and components and abnormal knocking risk caused by structural defects of the existing control valve.

## Description

This application claims priority to Chinese Patent Application No. 202310823461.8, filed with the China National Intellectual Property Administration on July 6, 2023, and entitled "ENERGY-SAVING ENGINE OIL CONTROL VALVE WITH INTERNAL ENGINE OIL CIRCULATION AND ENGINE SYSTEM", the entire content of which is incorporated in this application by reference.

### TECHNICAL FIELD

The present application relates to the field of engine oil control valve technology and, in particular, to an energy-saving engine oil control valve with internal engine oil circulation and an engine system.

### BACKGROUND

Variable valve timing adjustment of vehicle engines refers to changing the phase relationship between a camshaft and a crankshaft so that the engine obtains the best valve timing under an operating condition, which greatly improves the fuel economy, power torque and emission characteristics of the engine.

Variable valve timing adjustment mainly refers to outputting oil pressure from an engine oil pump to an engine oil control valve, and directly driving VVT (Variable Valve Timing, variable valve timing) for phase adjustment. This approach has drawbacks such as high engine oil pressure demand, significant engine oil leakage, which increases the workload of the engine oil pump and thus increases the overall consumption of the engine oil. Therefore, in the context of the extreme thermal efficiency requirements of hybrid engines, an energy-saving engine oil control valve needs to be provided.

Currently, there are some energy-saving engine oil control valves that can use camshaft torque to achieve internal engine oil circulation to reduce the workload of the engine oil pump. However, their implementations generally use more than two check valves and provide the check valve in a piston to move synchronously with the piston. The structure is relatively complex, the manufacturing cost and assembly difficulty are high, and the durability and reliability of the parts are low.

A Chinese invention patent (Publication Number: CN110318836A) discloses a radial circuit energy-saving engine oil control valve, which can realize an internal engine oil circulation function. However, it uses two check valves to realize the internal engine oil circulation function, which has high manufacturing cost and assembly difficulty. In addition, the check valve that realizes the internal engine oil circulation function is provided inside a piston. While realizing the internal engine oil circulation function, the check valve will perform high-frequency reciprocating motion with the piston. The durability and reliability of the parts are low with an abnormal knocking risk.

### SUMMARY

The purpose of the present application is to provide an energy-saving engine oil control valve with internal engine oil circulation, which is used to solve the problems of high manufacturing cost and assembly difficulty, low durability and reliability of parts and the abnormal knocking risk caused by structural defects of existing control valves.

In order to achieve the above technical purposes, technical solutions adopted in the present application are as follows.

An energy-saving engine oil control valve with internal engine oil circulation, including a housing, a valve body and a piston, all of which are hollow structures;
both ends of the housing are formed with a mounting port and a first oil inlet, respectively, and the housing is radially provided with a first working oil hole and a second working oil hole;
the valve body is fixedly mounted in the housing; the valve body is provided with a mounting groove; an annular check valve is mounted in the mounting groove, and a side wall of the valve body is radially provided with a fifth communicating oil port, a seventh communicating oil port, a ninth communicating oil port, a fourteenth communicating oil port, a fourth communicating oil port and a sixth communicating oil port, which penetrate the side wall of the valve body;
an outer wall of the piston is provided with a third annular oil groove, a second annular oil groove and a fourth annular oil groove, and the piston is provided with a fourth oil inlet penetrating a side wall of the piston at the third annular oil groove;
the first oil inlet is communicated with the fourth oil inlet; the piston is slidably mounted in the valve body; the oil inlet is communicated with the fourth oil inlet via a hollow inner cavity of the piston;
the piston includes a first state and a second state;
when the piston is in the first state, the third annular oil groove is communicated with the sixth communicating oil port, and the second working oil hole is sequentially communicated with the fourth communicating oil port, the second annular oil groove, the ninth communicating oil port, and the fifth communicating oil port; and
when the piston is in the second state, the third annular oil groove is communicated with the fourth communicating oil port, and the first working oil hole is sequentially communicated with the sixth communicating oil port, the fourth annular oil groove, the fourteenth communicating oil port, and the seventh communicating oil port.

It is further defined that an outer wall of the valve body is provided with an eighth communicating oil port between the fifth communicating oil port and the ninth communicating oil port, and the outer wall of the valve body is provided with a thirteenth communicating oil port between the seventh communicating oil port and the fourteenth communicating oil port. Such a structural design connects the fifth communicating oil port and the ninth communicating oil port, and the seventh communicating oil port and the fourteenth communicating oil port, respectively, through the eighth communicating oil port and the thirteenth communicating oil port provided on the outer wall of the valve body. It has a simple structure, is convenient to manufacture, and has strong practicality. In fact, other communicating manners can also be adopted according to actual needs, for example, providing corresponding oil ports for communication on an inner wall of the housing, as long as the communication between the fifth communicating oil port and the ninth communicating oil port, and the communication between the seventh communicating oil port and the fourteenth communicating oil port can be completed.

It is further defined that the housing is further radially provided with a first oil drain hole, the valve body is further radially provided with a third communicating oil port, an outer wall of the valve body is provided with a fifteenth communicating oil port, and the first oil drain hole is communicated with the third communicating oil port via the fifteenth communicating oil port. With such a structural design, an enclosed space formed by an end of the piston and an end of the valve body is destroyed by the third communicating oil port, thereby achieving the degassing function and avoiding the enclosed space from affecting the movement of the piston, and it has strong practicality.

It is further defined that the housing is further radially provided with a second oil drain hole, the valve body is further radially provided with a tenth communicating oil port and a twelfth communicating oil port, and an outer wall of the valve body is provided with an eleventh communicating oil port between the tenth communicating oil port and the twelfth communicating oil port; the second oil drain hole is communicated with the eleventh communicating oil port; when the piston is in the first state, the second annular oil groove is communicated with the tenth communicating oil port; and when the piston is in the second state, the fourth annular oil groove is communicated with the twelfth communicating oil port. With such a structural design, by the communication between the twelfth communicating oil port and the fourth annular oil groove, when the engine oil in a VVT advance adjustment oil chamber is internally circulated and utilized, part of the oil in the fourth annular oil groove flows out of the control valve through the twelfth communicating oil port, the eleventh communicating oil port, and the second oil drain hole, thereby avoiding the problem that a positive camshaft torque cannot quickly push a VVT rotor to rotate due to excessive oil pressure in the VVT advance adjustment oil chamber.

Similarly, through the communication between the tenth communicating oil port and the second annular oil groove, when the engine oil in a VVT retard adjustment oil chamber is internally circulated and utilized, part of the oil in the second annular oil groove flows out of the control valve through the tenth communicating oil port, the eleventh communicating oil port and the second oil drain hole, thereby avoiding the problem that a negative camshaft torque cannot quickly push the VVT rotor to rotate due to excessive oil pressure in the VVT retard adjustment oil chamber.

It is further defined that an inner wall of the housing is provided with a limit groove at an end where the mounting port is located, a limit clamp is mounted in the limit groove, and the housing is provided with a limit flange at the first oil inlet. With such a structural design, the fixed mount between the valve body and the housing is completed through the cooperation between the limit clamp and the limit rib, and it has a simple structure, is convenient to mount, and has strong practicality.

It is further defined that a filter screen assembly is mounted between the flange and the valve body. With such a structural design, the filter screen assembly is located at the first oil inlet and squeezed on the limit flange of the housing through the valve body, the mounting is completed, it filters the engine oil entering the control valve, which can prevent foreign particles in the engine oil from entering the engine oil control valve, and has strong practicality.

It is further defined that the fifth communicating oil port and the seventh communicating oil port are both slot-shaped through holes. With such a structural design, the fifth communicating oil port and the seventh communicating oil port are formed by slot-shaped through holes, which can increase flow areas of the fifth communicating oil port and the seventh communicating oil port as much as possible when a width of the mounting groove is limited, thereby increasing a flow rate of the engine oil, and it has a simple structure and strong practicality.

It is further defined that the third annular oil groove is located between the second annular oil groove and the fourth annular oil groove.

It is further defined that the valve body and the piston are both hollow structures with one end opened and the other end closed, an inner wall of the closed end of the valve body is provided with a return spring mounting base, the closed end of the piston is provided with a return spring mounting seat, and a return spring is mounted between the return spring mounting base and the return spring mounting seat. With such a structural design, the piston is pushed by the return spring mounted between the valve body and the piston in cooperation with an electromagnet. When the electromagnet releases the push on the piston, the piston may be reset under the action of the return spring. It has simple structure and strong practicality.

It is further defined that an end of an outer wall of the valve body near the first oil inlet is circumferentially provided with a first communicating oil port, the outer wall of the valve body is radially provided with a second communicating oil port communicated with the first communicating oil port, an outer wall of the piston is further provided with a first annular oil groove and a second oil inlet, the second oil inlet communicates the first annular oil groove with the hollow inner cavity of the piston, and the hollow inner cavity in the piston that communicates the second oil inlet with the fourth oil inlet is the third oil inlet; and
the first oil inlet, the first communicating oil port, the second communicating oil port, the first annular oil groove, the second oil inlet, the third oil inlet, the fourth oil inlet and the third annular oil groove are all in a constant communicated state when the piston is in any state.

It is further defined that the first oil inlet is communicated with the fourth oil inlet and mounted with an oil inlet check valve. With such a structural design, the oil inlet check valve is mounted in the oil inlet circuit, which can effectively improve a response speed of the VVT during the startup of the engine after a long time storage, and avoid the abnormal knocking problem of starting VVT caused by the lack of oil inside the VVT after a long time storage of the engine; at the same time, the oil inlet check valve provided in the oil inlet circuit can also effectively avoid the backflow phenomenon in the oil inlet circuit caused by a high oil pressure of the VVT oil chamber generated by the camshaft torque, thereby improving the variable valve timing adjustment speed.

It is further defined that a plug mounting hole is axially opened at an open end of the piston, a plug is press-fitted into the plug mounting hole with an interference fit, the piston is provided with a check valve disc mounting seat between the fourth oil inlet and the second oil inlet,
the oil inlet check valve includes a check valve disc and a disc check valve spring, the check valve disc is mounted on the check valve disc mounting seat, and the disc check valve spring is mounted between the plug and the check valve disc. With such a structural design, the oil inlet check valve composed of the check valve disc and the disc check valve spring cooperates with the plug which is press-fitted into the plug mounting hole with interference fit to complete the mounting of the oil inlet check valve, which has a simple structure, is convenient to mount, and has strong practicality.

The present application further discloses an engine system, including the above energy-saving engine oil control valve with internal engine oil circulation.

The above technical solutions have the following advantages.

The annular check valve provided in the valve body cooperates with the ninth communicating oil port, the eighth communicating oil port, the fifth communicating oil port /the fourteenth communicating oil port, the thirteenth communicating oil port, and the seventh communicating oil port which are provided on the valve body and communicated sequentially to realize the internal engine oil circulation function, thereby reducing the engine oil consumption during adjustment.

The annular check valve is provided in the valve body. Compared with the technical solution of providing the check valve inside the piston, while realizing the oil circulation function, the annular check valve may not reciprocate with the piston at a high frequency, thereby improving the reliability of the parts and reducing the abnormal knocking risk.

The existing two check valves is replaced by one annular check valve to realize the internal engine oil circulation function, thereby reducing the manufacturing cost and assembly difficulty.

The oil inlet check valve is provided in the oil inlet circuit to realize the oil storage function inside the VVT oil chamber, effectively improving the response speed of the VVT during the startup of the engine after a long time storage, and avoiding the abnormal knocking problem of starting VVT caused by the lack of oil inside the VVT after the long time storage of the engine.

The oil inlet check valve provided in the oil inlet circuit can also effectively avoid the backflow phenomenon of the oil inlet circuit caused by the high oil pressure in the VVT oil chamber generated by the camshaft torque, thereby increasing the variable valve timing adjustment speed.

Through the communication between the twelfth communicating oil port and the fourth annular oil groove, when the engine oil in a VVT advance adjustment oil chamber is internally circulated and utilized, part of the oil in the fourth annular oil groove flows out of the control valve through the twelfth communicating oil port, the eleventh communicating oil port, and the second oil drain hole, thereby avoiding the problem that the positive camshaft torque cannot quickly push the VVT rotor to rotate due to excessive oil pressure in the VVT advance adjustment oil chamber.

Similarly, through the communication between the tenth communicating oil port and the second annular oil groove, when the engine oil in the VVT retard adjustment oil chamber is internally circulated and utilized, part of the oil in the second annular oil groove flows out of the control valve through the tenth communicating oil port, the eleventh communicating oil port and the second oil drain hole, thereby avoiding the problem that the negative camshaft torque cannot quickly push the VVT rotor to rotate due to excessive oil pressure in the VVT retard adjustment oil chamber.

The fifth communicating oil port and the seventh communicating oil port are formed by slot-shaped through holes, which can increase flow areas of the fifth communicating oil port and the seventh communicating oil port as much as possible when a width of the mounting groove is limited, thereby increasing a flow rate of the engine oil, and it has a simple structure and strong practicality.

### BRIEF DESCRIPTION OF DRAWINGS

In order to more clearly illustrate embodiments of the present application or technical solutions in the prior art, the drawings required for use in the description of the embodiments or the prior art will be briefly introduced below. Obviously, the drawings in the following description are some embodiments of the present application. For those of ordinary skill in the art, other related drawings may be obtained based on these drawings without creative efforts.
FIG. 1 is a schematic structural exploded diagram of an embodiment of an energy-saving engine oil control valve with internal engine oil circulation and an engine system of the present application.
FIG. 2 is a cross-sectional structural schematic diagram of an embodiment of an energy-saving engine oil control valve with internal engine oil circulation and an engine system of the present application.
FIG. 3 is a cross-sectional structural schematic diagram of a of a housing portion in an embodiment of an energy-saving engine oil control valve with internal engine oil circulation and an engine system of the present application.
FIG. 4 is a first structural schematic diagram of a valve body portion in an embodiment of an energy-saving engine oil control valve with internal engine oil circulation and an engine system of the present application.
FIG. 5 is a second structural schematic diagram of a valve body portion in an embodiment of an energy-saving engine oil control valve with internal engine oil circulation and an engine system of the present application.
FIG. 6 is a cross-sectional schematic structural diagram of a valve body portion in an embodiment of an energy-saving engine oil control valve with internal engine oil circulation and an engine system of the present application.
FIG. 7 is a cross-sectional schematic structural diagram of a piston portion in an embodiment of an energy-saving engine oil control valve with internal engine oil circulation and an engine system of the present application.
FIG. 8 is a schematic structural diagram of a filter screen assembly portion in an embodiment of an energy-saving engine oil control valve with internal engine oil circulation and an engine system of the present application.
FIG. 9 is a schematic structural diagram of an assembly structure assembled on a VVT and a camshaft in an embodiment of an energy-saving engine oil control valve with internal engine oil circulation and an engine system of the present application.

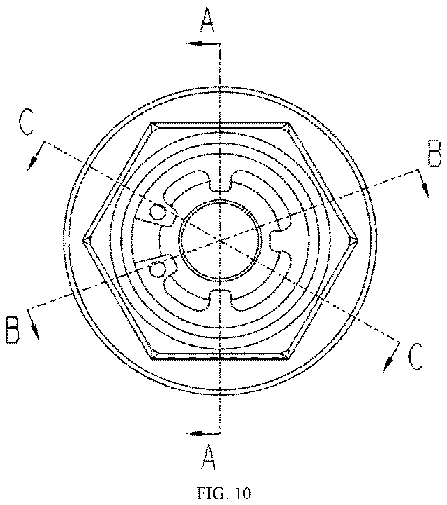

FIG. 10 is a schematic structural diagram of an embodiment of energy-saving engine oil control valve with internal engine oil circulation and an engine system of the present application.
FIG. 11 is a schematic structural diagram of a cross section along an A-A direction in FIG. 10 in working mode 1.
FIG. 12 is a schematic structural diagram of a cross section along a B-B direction in FIG. 10 in working mode 1.
FIG. 13 is a schematic structural diagram of a cross section along a C-C direction in FIG. 10 in working mode 1.
FIG. 14 is a schematic structural diagram of a cross section along an A-A direction in FIG. 10 in working mode 2.
FIG. 15 is a schematic structural diagram of a cross section along a B-B direction in FIG. 10 in working mode 2.
FIG. 16 is a schematic structural diagram of a cross section along a C-C direction in FIG. 10 in working mode 2.

### Description of reference numerals:

1-housing; 11-first oil inlet; 12-first working oil hole; 13-second working oil hole; 14-first oil drain hole; 15-second oil drain hole; 16-limit groove; 17-limit flange;
2-valve body; 21-mounting groove; 22-second communicating oil port; 23-first communicating oil port; 24-third communicating oil port;
25-return spring mounting base; 26-fourth communicating oil port; 27-fifth communicating oil port; 28-sixth communicating oil port;
29-seventh communicating oil port; 210-eighth communicating oil port; 211-ninth communicating oil port; 212-tenth communicating oil port;
213-eleventh communicating oil port; 214-twelfth communicating oil port; 215-thirteenth communicating oil port;
216-fourteenth communicating oil port; 217-fifteenth communicating oil port;
3-piston; 31-return spring mounting seat; 32-first annular oil groove; 33-second oil inlet; 34-second annular oil groove;
35-third annular oil groove; 36-fourth oil inlet; 37-fourth annular oil groove; 38-plug mounting hole;
39-check valve disc mounting seat; 310-third oil inlet;
4-filter screen assembly; 41-filter screen seat; 42-filter screen;
5-annular check valve; 6-return spring; 7-check valve disc; 8-disc check valve spring; 9-plug; 10-limit clamp; and
100-VVT stator; 200-VVT rotor; 300-advance adjustment oil chamber; 400-retard adjustment oil chamber; 500-electromagnet; 700-negative camshaft torque; 800-positive camshaft torque; 900-camshaft.

### DESCRIPTION OF EMBODIMENTS

The present application will be described in detail below in conjunction with the drawings and specific embodiments. It should be noted that in the drawings or the description of the specification, similar or identical parts use the same reference numeral, and the implementations not shown or described in the drawings are forms known to those ordinary skill in the art. In addition, directional terms, such as "upper", "lower", "top", "bottom", "left", "right", "front", "back", etc., mentioned in the embodiments are only referenced to the directions of the drawings and are not used to limit the protection scope of the present application.

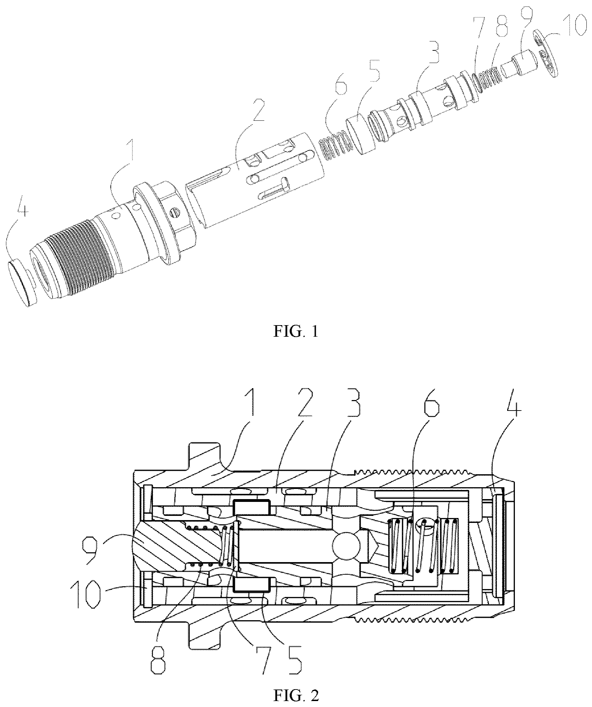

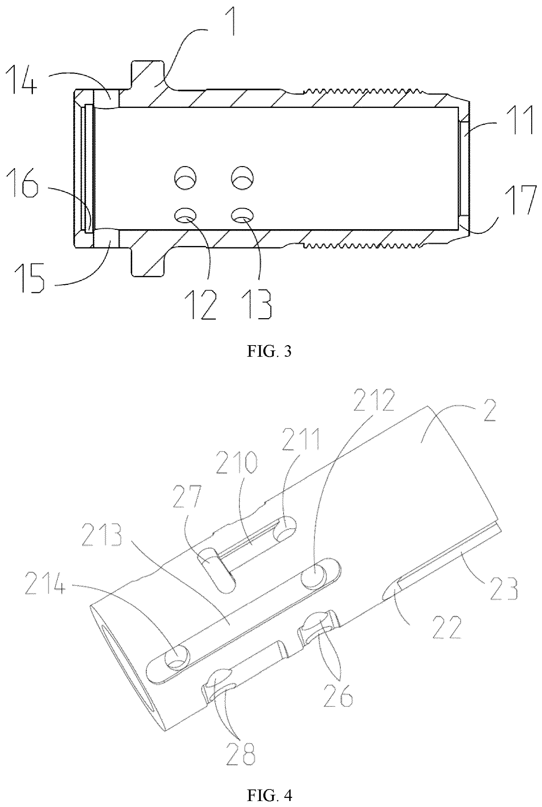

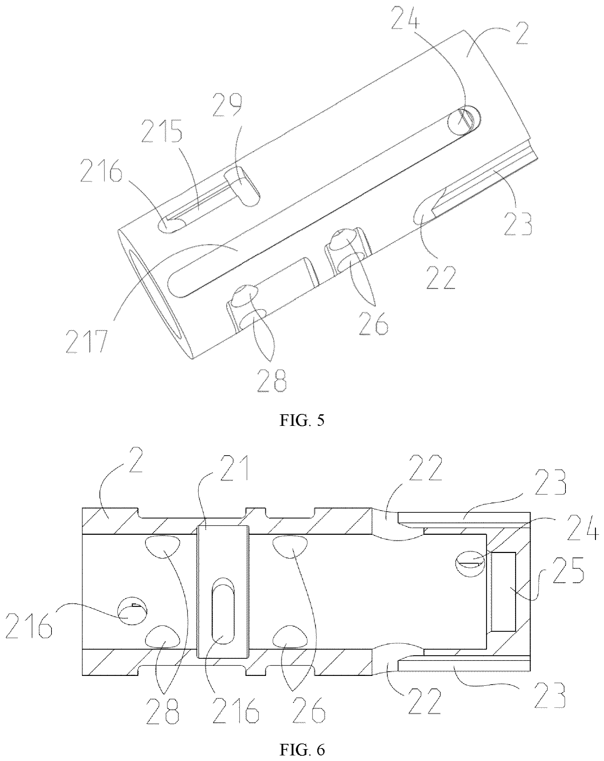

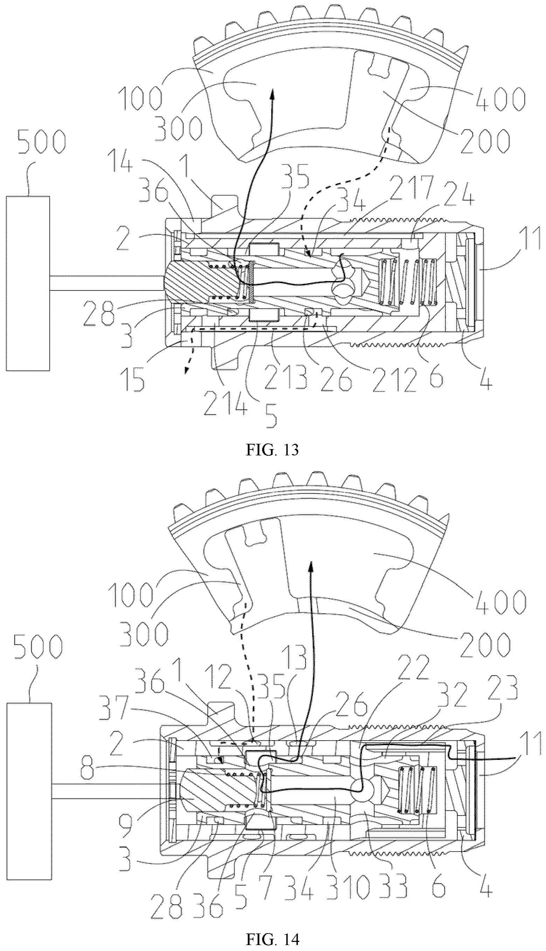

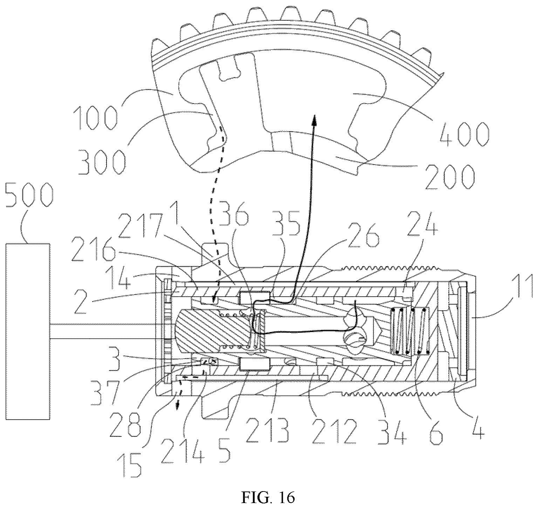

As shown in FIG. 1 to FIG. 2, an energy-saving engine oil control valve with internal engine oil circulation of the present application includes a housing 1, a valve body 2 and a piston 3, all of which are hollow structures;
as shown in FIG. 3, both ends of the housing 1 are formed with a mounting port and a first oil inlet 11, respectively, and the housing 1 is radially provided with a first working oil hole 12, a second working oil hole 13, a first oil drain hole 14 and a second oil drain hole 15;
as shown in FIG. 2 and FIG. 4 to FIG. 6, the valve body 2 is further radially provided with a third communicating oil port 24, and an outer wall of the valve body 2 is provided with a fifteenth communicating oil port 217, and the first oil drain hole 14 is communicated with the third communicating oil port 24 via the fifteenth communicating oil port 217;
the valve body 2 is further radially provided with a tenth communicating oil port 212 and a twelfth communicating oil port 214, and the outer wall of the valve body 2 is provided with an eleventh communicating oil port 213 between the tenth communicating oil port 212 and the twelfth communicating oil port 214;
the second oil drain hole 15 is communicated with the eleventh communicating oil port 213;
as shown in FIG. 13, when the piston 3 is in a first state, the second annular oil groove 34 is communicated with the tenth communicating oil port 212; and
as shown in FIG. 16, when the piston 3 is in a second state, the fourth annular oil groove 37 is communicated with the twelfth communicating oil port 214.

The first oil inlet 11 is communicated with the fourth oil inlet 36 and is mounted with an oil inlet check valve, an open end of the piston 3 is axially provided with a plug mounting hole 38, a plug 9 is press-fitted into the plug mounting hole 38 with an interference fit, and the piston 3 is provided with a check valve disc mounting seat 39 between the fourth oil inlet 36 and the second oil inlet 33;
the oil inlet check valve includes a check valve disc 7 and a disc check valve spring 8;
the check valve disc 7 is mounted on the check valve disc mounting seat 39, and the disc check valve spring 8 is mounted between the plug 9 and the check valve disc 7.

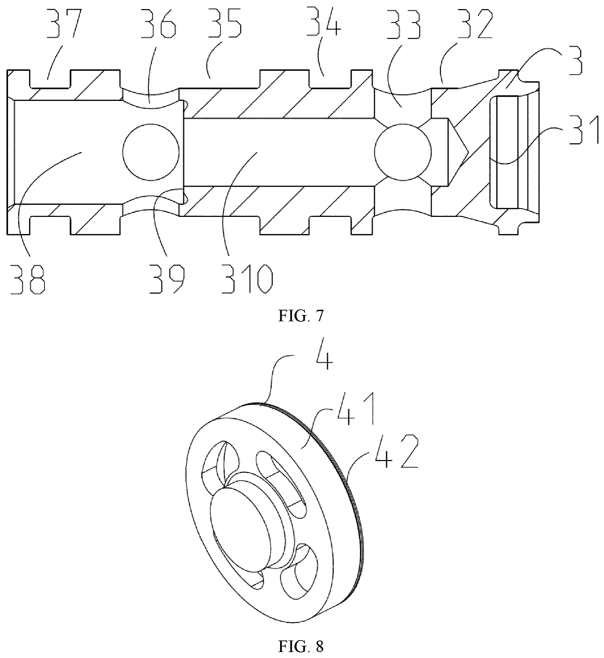

A filter screen assembly 4 is mounted between a flange 17 and the valve body 2, and the filter screen assembly 4 includes a filter screen seat 41 and a filter screen 42; and
the housing 1 is provided with a limiting groove 16 at an end where the mounting port is located, and a limit clamp 10 is mounted in the limiting groove 16;
the housing 1 is provided with the limit flange 17 at the first oil inlet 11,
the valve body 2 is fixedly mounted in the housing 1 through the limit clamp 10 and the limit flange 17;
as shown in FIG. 2 to FIG. 6, the valve body 2 is provided with a mounting groove 21, and an annular check valve 5 is mounted in the mounting groove 21,
the valve body 2 is provided with a fifth communicating oil port 27 and a seventh communicating oil port 29 penetrating the side wall of the valve body 2 at the mounting groove 21,
the fifth communicating oil port 27 and the seventh communicating oil port 29 are both slot-shaped through holes;
the side wall of the valve body 2 is further radially provided with a ninth communicating oil port 211 and a fourteenth communicating oil port 216 penetrating the side wall of the valve body 2,
the outer wall the valve body 2 is provided with an eighth communicating oil port 210 between the fifth communicating oil port 27 and the ninth communicating oil port 211,
the outer wall of the valve body 2 is provided with a thirteenth communicating oil port 215 between the seventh communicating oil port 29 and the fourteenth communicating oil port 216.
the valve body 2 is further radially provided with a fourth communicating oil port 26 and a sixth communicating oil port 28,
the first working oil hole 12 is communicated with the sixth communicating oil port 28, and the second working oil hole 13 is communicated with the fourth communicating oil port 26,
as shown in FIG. 2 and FIG. 7, an outer wall of the piston 3 is provided with a third annular oil groove 35, a second annular oil groove 34 and a fourth annular oil groove 37, and the piston 3 is provided with a fourth oil inlet 36 penetrating the side wall of the piston 3 at the third annular oil groove 35,
the first oil inlet 11 is communicated with the fourth oil inlet 36,
the third annular oil groove 35 is located between the second annular oil groove 34 and the fourth annular oil groove 37.

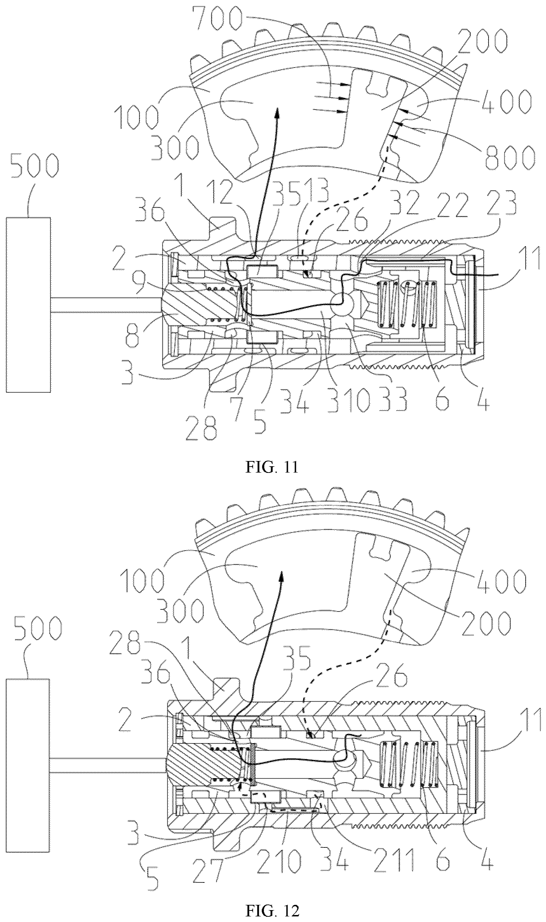

The piston 3 is slidably mounted in the valve body 2. Both the valve body 2 and the piston 3 are hollow structures with one end opened and the other end closed,
an inner wall of the closed end of the valve body 2 is provided with a return spring mounting base 25,
the closed end of the piston 3 is provided with a return spring mounting seat 31,
a return spring 6 is mounted between the return spring mounting base 25 and the return spring mounting seat 31;
the oil inlet 11 is communicated with the fourth oil inlet 36 through the hollow inner cavity of the piston 3,
the piston 3 includes a first state and a second state;
as shown in FIG. 11 to FIG.13, when the piston 3 is in the first state, the third annular oil groove 35 is communicated with the sixth communicating oil port 28, and the second working oil hole 13 is sequentially communicated with the fourth communicating oil port 26, the second annular oil groove 34, the ninth communicating oil port 211, the eighth communicating oil port 210 and the fifth communicating oil port 27;
as shown in FIG. 14 to FIG. 16, when the piston 3 is in the second state, the third annular oil groove 35 is communicated with the fourth communicating oil port 26, and the first working oil hole 12 is sequentially communicated with the sixth communicating oil port 28, the fourth annular oil groove 37, the fourteenth communicating oil port 216, the thirteenth communicating oil port 215, and the seventh communicating oil port 29.

An end of the outer wall of the valve body 2 near the first oil inlet 11 is circumferentially provided with first communicating oil port 23,
the outer wall of the valve body 2 is radially provided with a second communicating oil port 22 which is communicated with the first communicating oil port 23,
the outer wall of the piston 3 is further provided with a first annular oil groove 32 and a second oil inlet 33, and the second oil inlet 33 communicates with the first annular oil groove 32 and the hollow inner cavity of the piston 3,
a hollow inner cavity of the piston 3 that communicates the second oil inlet 33 and the fourth oil inlet 36 is the third oil inlet 310,
the first oil inlet 11, the first communicating oil port 23, the second communicating oil port 22, the first annular oil groove 32, the second oil inlet 33, the third oil inlet 310, the fourth oil inlet 36 and the third annular oil groove 35 all in a constant communicated state when the piston 3 is in any state.

The first oil inlet 11 is communicated with the fourth oil inlet 36 and is mounted with an oil inlet check valve, an open end of the piston 3 is axially provided with a plug mounting hole 38, a plug 9 is press-fitted into the plug mounting hole 38 with an interference fit, the piston 3 is provided with a check valve disc mounting seat 39 between the fourth oil inlet 36 and the second oil inlet 33,
the oil inlet check valve includes a check valve disc 7 and a disc check valve spring 8, and
the check valve disc 7 is mounted on the check valve disc mounting seat 39, and the disc check valve spring 8 is mounted between the plug 9 and the check valve disc 7.

An engine system includes the above energy-saving engine oil control valve with internal engine oil circulation.

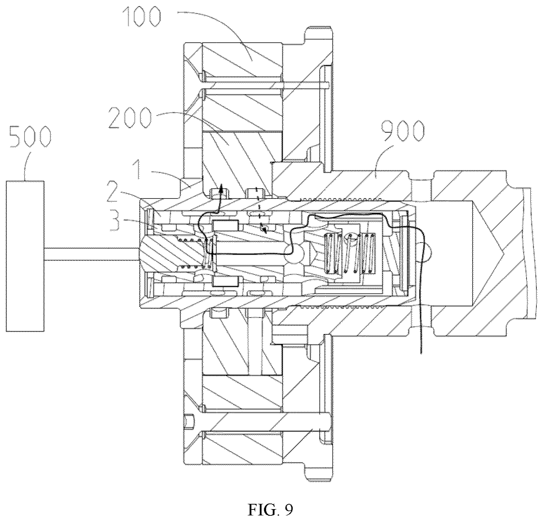

In this embodiment, the engine oil control valve has three working modes, namely, variable valve timing phase advance adjustment, variable valve timing phase retard adjustment, and variable valve timing phase hold adjustment. In the two working modes of variable valve timing phase advance adjustment and variable valve timing phase retard adjustment, the camshaft torque can be used to realize the internal engine oil circulation function. In addition, it should be understood that the oil consumption in the variable valve timing phase hold working mode is extremely low, in this working mode, it is only necessary to supplement the oil drained from the gap between the components in the variable valve timing phase adjustment system. Therefore, there is no need to realize the internal engine oil circulation function. The application will not elaborate on this working mode, and further describe the two working modes of variable valve timing phase advance adjustment and variable valve timing phase retard adjustment in detail in conjunction with the accompanying drawings;
as shown in FIG. 9, an engine oil control valve is assembled on a VVT rotor 200 and fixed to a camshaft 900 by threaded connection. The electromagnet 500 is assembled on a front cover (not shown in the drawings), the engine oil enters the camshaft 900 from the cylinder head oil circuit (not shown in the drawings), and then enters the VVT advance oil chamber (the oil circuit is indicated by the solid arrow in the drawings). During oil intake, the oil in the VVT retard oil chamber is drained to the inside of the engine oil control valve for internal engine oil circulation and oil drain (the oil circuit is indicated by the dashed arrow in FIG. 9).

Working mode 1, variable valve timing phase advance adjustment is as follows.

As shown in FIG. 11, FIG. 12 and FIG. 13, an ECU executes a variable valve timing phase advance adjustment command and transmits the corresponding duty cycle signal to the electromagnet 500. The electromagnet 500 generates electromagnetic force to push the piston 3 of the engine oil control valve to overcome the spring force of the return spring 6 to a variable valve timing phase advance adjustment stroke. At this time, the first working oil hole 12, the sixth communicating oil port 28, the third annular oil groove 35, and the fourth oil inlet 36 are in a constant communicated state; the second working oil hole 13, the fourth communicating oil port 26, the second annular oil groove 34, the ninth communicating oil port 211, the eighth communicating oil port 210, and the fifth communicating oil port 27 are in a constant communicated state; and the second annular oil groove 34, the tenth communicating oil port 212, the eleventh communicating oil port 213, and the second oil drain hole 15 are in a constant communicated state.

Due to the characteristics of the annular check valve 5, the engine oil cannot enter the fifth communicating oil port 27 from the third annular oil groove 35, so as to avoid the engine oil from entering the VVT retard adjustment oil chamber 400 from the oil inlet circuit when the variable valve timing phase advance adjustment is performed. Furthermore, the engine oil may enter the third annular oil groove 35 from the fifth communicating oil port 27 under the action of the pressure difference.

As shown in FIG. 11, FIG. 12 and FIG. 13, the solid arrows indicate a direction of the oil inlet circuit. The engine oil flows from the first oil inlet 11 through the filter screen assembly 4 into the first communicating oil port 23, and then flows sequentially through the second communicating oil port 22, the first annular oil groove 32, the second oil inlet 33, and the third oil inlet 310. Under the action of the pressure of the inlet engine oil, the check valve disc 7 overcomes the spring force of the disc check valve spring 8 to open, and then, the engine oil flows through the fourth oil inlet 36, the third annular oil groove 35, the sixth communicating oil port 28, and the first working oil hole 12, and enters the VVT advance adjustment oil chamber 300 to drive the VVT rotor 200 to achieve the variable valve timing phase advance adjustment.

When the system is in a positive camshaft torque 800, the torque is applied to the VVT rotor 200 to generate a high oil pressure in the VVT advance adjustment oil chamber 300. When the high oil pressure is greater than the oil pressure in the oil inlet circuit, the check valve disc 7 is closed, effectively avoiding the backflow phenomenon in the oil inlet circuit, thereby improving a VVT variable valve timing adjustment speed; further, while the engine oil pushes the VVT rotor 200 to perform the variable valve timing phase advance adjustment, the VVT retard adjustment oil chamber 400 is in an oil drain state. As shown in FIG. 11 and FIG.12, the dashed arrows indicate the direction of the oil drain circuit, the engine oil in the VVT retard adjustment oil chamber flows sequentially through the second working oil hole 13, the fourth communicating oil port 26, the second annular oil groove 34, the ninth communicating oil port 211, the eighth communicating oil port 210, and the fifth communicating oil port 27 to reach the inlet of the annular check valve 5. At this time, under the action of a negative camshaft torque 700, the VVT retard adjustment oil chamber 400 generates a high oil pressure, the annular check valve 5 is opened, and the engine oil enters the third annular oil groove 35 and merges with the oil inlet circuit, realizing the internal engine oil circulation function.

Part of the engine oil in the VVT retard adjustment oil chamber 400 enters the VVT advance adjustment oil chamber 300 through the internal engine oil circulation oil circuit for circulation and utilization, and another part of the engine oil is drained into an engine oil pan (not shown in the drawings) through the second oil drain hole 15. It is to be understood that it is necessary to set up an oil drain circuit separately, it can be understood that the camshaft torque changes periodically, when the system is in the positive camshaft torque 800, the VVT retard adjustment oil chamber 400 cannot generate a high oil pressure to open the annular check valve 5 to realize the internal engine oil circulation function, and at this time, the engine oil in the VVT retard adjustment oil chamber 400 must be drained through the oil drain circuit to make the engine oil pressure in the VVT advance adjustment oil chamber 300 drive the VVT rotor 200 to perform the variable valve timing phase advance adjustment. As shown in FIG. 13, after the engine oil in the VVT retard adjustment oil chamber 400 flows to the second annular oil groove 34, part of the engine oil is diverted to the tenth communicating oil port 212, and then flows to the eleventh communicating oil port 213, the twelfth communicating oil port 214, and the second oil drain hole 15 to be drained into the engine oil pan.

Working mode 2, the variable valve timing phase retard adjustment is as follows.

As shown in FIG. 14, FIG. 15 and FIG. 16, an ECU executes a variable valve timing phase retard adjustment command and transmits the corresponding duty cycle signal to the electromagnet 500. The electromagnet generates electromagnetic force to push the piston 3 of the engine oil control valve to overcome the spring force of the return spring 6 to a variable valve timing phase retard adjustment stroke. At this time, the second working oil hole 13, the fourth communicating oil port 26, the third annular oil groove 35, and the fourth oil inlet 36 are in a constant communicated state; the first working oil hole 12, the sixth communicating oil port 28, the fourth annular oil groove 37, the fourteenth communicating oil port 216, the thirteenth communicating oil port 215, and the seventh communicating oil port 29 are in a constant communicated state; and the fourth annular oil groove 37, the twelfth communicating oil port 214, the eleventh communicating oil port 213, and the second oil drain hole 15 are in a constant communicated state.

Due to the characteristics of the annular check valve 5, the engine oil cannot enter the seventh communicating oil port 29 from the third annular oil groove 35, so as to avoid the engine oil from entering the VVT advance adjustment oil chamber 300 from the oil inlet circuit when the variable valve timing phase retard adjustment is performed. Further, the engine oil may enter the third annular oil groove 35 from the seventh communicating oil port 29 under the action of the pressure difference.

In FIG. 14, FIG. 15 and FIG. 16, the solid arrows indicate a direction of the oil inlet circuit. The engine oil flows from the first oil inlet 11 through the filter screen assembly 4 into the first communicating oil port 23, and then flows sequentially through the second communicating oil port 22, the first annular oil groove 32, the second oil inlet 33, and the third oil inlet 310. Under the action the pressure of the engine oil, the check valve disc 7 overcomes the spring force of the disc check valve spring 8 to open, and then the engine oil flows through the fourth oil inlet 36, the third annular oil groove 35, the fourth communicating oil port 26, and the second working oil hole 13, and enters the VVT retard adjustment oil chamber 400 to drive the VVT rotor 200 to achieve the variable valve timing phase retard adjustment.

When the system is in the negative camshaft torque 700, the torque is applied to the VVT rotor 200 to generate a high oil pressure in the VVT retard adjustment oil chamber 400. When the high oil pressure is greater than the engine oil pressure of the oil inlet circuit, the check valve disc 7 is closed, effectively avoiding the backflow phenomenon in the oil inlet circuit, thereby improving the VVT variable valve timing adjustment speed.

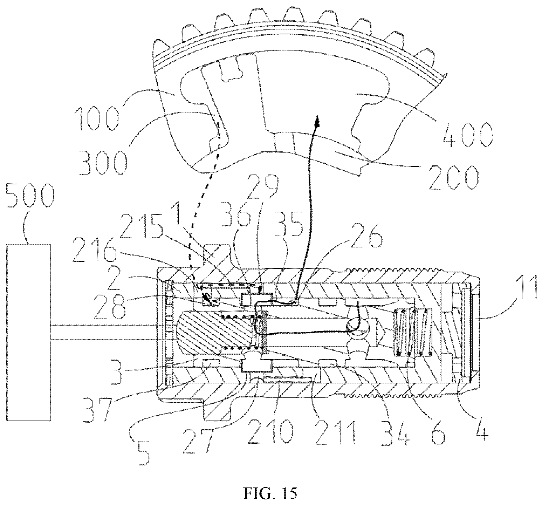

While the engine oil pushes the VVT rotor 200 to perform the variable valve timing phase retard adjustment, the VVT advance adjustment oil chamber 300 is in an oil drain state. In conjunction with the direction of the oil drain circuit indicated by the dashed arrows in FIG. 14 and FIG. 15, the engine oil in the VVT advance adjustment oil chamber flows sequentially through the first working oil hole 12, the sixth communicating oil port 28, the fourth annular oil groove 37, the fourteenth communicating oil port 216, the thirteenth communicating oil port 215, and the seventh communicating oil port 29 to reach the inlet of the annular check valve 5. At this time, under the action of the positive camshaft torque 800, the VVT advance adjustment oil chamber 300 generates a high oil pressure, the annular check valve 5 is opened, and the engine oil enters the third annular oil groove 35 and merges with the oil inlet circuit, realizing the internal engine oil circulation function.

It should be further noted that, part of the engine oil in the VVT advance adjustment oil chamber 300 enters the VVT retard adjustment oil chamber 400 through the internal engine oil circulation oil circuit for circulation and utilization, and another part of the engine oil is drained into the engine oil pan (not shown in the drawings) through the second oil drain hole 15. It should be understood that it is necessary to set up an oil drain circuit separately because the camshaft torque changes periodically, when the system is in the negative camshaft torque 700, the VVT advance adjustment oil chamber 300 cannot generate a high oil pressure to open the annular check valve 5 and realize the internal engine oil circulation function, and at this time, the engine oil in the VVT advance adjustment oil chamber 300 must be drained through the oil drain circuit to make the engine oil pressure in the VVT retard adjustment oil chamber 400 drive the VVT rotor 200 to perform variable valve timing phase retard adjustment. As shown in FIG. 16, after the engine oil in the VVT advance adjustment oil chamber flows to the fourth annular oil groove 37, part of the engine oil is diverted to the twelfth communicating oil port 214, and then flows to the eleventh communicating oil port 213 and the second oil drain hole 15 to be drained into the engine oil pan.

With further reference to FIG. 11, the internal oil storage function of the VVT oil chamber implemented in the present application is illustrated. Taking the degassing VVT as an example, after the engine is shut down, the VVT is in the most advanced position of the variable valve timing phase as shown in FIG. 11. At this time, due to the disc-type check valve structure inside the piston, a closed oil storage oil chamber may be formed in the oil circuit consisting of the VVT advance adjustment oil chamber 300, the first working oil hole 12, the sixth communicating oil port 28, the third annular oil groove 35, and the fourth oil inlet 36, and the engine oil may not flow back to a cylinder head body oil circuit through the engine oil control valve inlet oil circuit, which effectively improves the response speed of the VVT for the variable valve timing phase adjustment during the startup of the engine after a long time storage and avoids the abnormal knocking problem of starting VVT caused by the lack of oil inside the VVT after a long time storage of the engine.

As shown in FIG. 13, the piston 3 reciprocates in the valve body 2 to achieve the degassing function through the third communicating oil port 24, the fifteenth communicating oil port 217, and the first oil drain hole 14, thereby avoiding a front end of the piston 3 and an inner cavity of the valve body 2 from forming a closed cavity that hinders the reciprocating motion of the piston 3. At the same time, the engine oil that drains into the cavity formed by the front end of the piston 3 and the valve body 2 through the clearance of the kinematic pair may also be drained through this oil circuit.

The assembly sequence of the control valve is as follows: mounting the filter screen assembly 4 into the limit flange 17 in the housing 1, where the filter screen assembly 4 and the limit flange 17 are provided with a fool-proof structure (not shown in the drawings) to ensure the uniqueness of the direction in which the filter screen assembly 4 is mounted into the housing 1; further mounting the annular check valve 5 into the annular check valve mounting groove 21; further mounting the valve body 2 into the housing 1, where a fool-proof structure (not shown in the drawings) is provided at the end face mating portion between the valve body 2 and the filter screen assembly 4 to ensure the uniqueness of the direction in which the valve body 2 is mounted into the housing 1; further mounting the return spring 6 into the return spring mounting base 25; further mounting the check valve disc 7 on the check valve disc mounting seat 39; further mounting the check valve spring 8 on the plug 9; further press-fitting the plug 9 into the plug mounting hole 38 with interference fit; further mounting the piston 3 into the valve body 2; further assembling the limit clamp 10. The assembly process of the engine oil control valve is smooth and the assembly is simple.

Finally, it should be noted that the above embodiments are only used to illustrate the technical solutions of the present application, rather than to limit it. Although the present application has been described in detail with reference to the aforementioned embodiments, those skilled in the art should understand that they can still modify the technical solutions recorded in the aforementioned embodiments, or replace some or all of the technical features therein with equivalents, and these modifications or replacements do not cause the essence of the corresponding technical solutions to deviate from the scope of the technical solutions of the embodiments of the present application.

## Claims

1. An energy-saving engine oil control valve with internal engine oil circulation, comprising a housing (1), a valve body (2) and a piston (3), all of which are hollow structures;
both ends of the housing (1) are formed with a mounting port and a first oil inlet (11), respectively, and the housing (1) is radially provided with a first working oil hole (12) and a second working oil hole (13);
the valve body (2) is fixedly mounted in the housing (1); the valve body (2) is provided with a mounting groove (21); an annular check valve (5) is mounted in the mounting groove (21), and a side wall of the valve body (2) is radially provided with a fifth communicating oil port (27), a seventh communicating oil port (29), a ninth communicating oil port (211), a fourteenth communicating oil port (216), a fourth communicating oil port (26) and a sixth communicating oil port (28), which penetrate the side wall of the valve body (2);
an outer wall of the piston (3) is provided with a third annular oil groove (35), a second annular oil groove (34) and a fourth annular oil groove (37), and the piston (3) is provided with a fourth oil inlet (36) penetrating a side wall of the piston (3) at the third annular oil groove (35);
the first oil inlet (11) is communicated with the fourth oil inlet (36); the piston (3) is slidably mounted in the valve body (2); the oil inlet (11) is communicated with the fourth oil inlet (36) via a hollow inner cavity of the piston (3);
the piston (3) comprises a first state and a second state;
when the piston (3) is in the first state, the third annular oil groove (35) is communicated with the sixth communicating oil port (28), and the second working oil hole (13) is sequentially communicated with the fourth communicating oil port (26), the second annular oil groove (34), the ninth communicating oil port (211), and the fifth communicating oil port (27); and
when the piston (3) is in the second state, the third annular oil groove (35) is communicated with the fourth communicating oil port (26), and the first working oil hole (12) is sequentially communicated with the sixth communicating oil port (28), the fourth annular oil groove (37), the fourteenth communicating oil port (216), and the seventh communicating oil port (29).

2. The energy-saving engine oil control valve with internal engine oil circulation according to claim 1, wherein an outer wall of the valve body (2) is provided with an eighth communicating oil port (210) between the fifth communicating oil port (27) and the ninth communicating oil port (211), and the outer wall of the valve body (2) is provided with a thirteenth communicating oil port 1 between the seventh communicating oil port (29) and the fourteenth communicating oil port (216).

3. The energy-saving engine oil control valve with internal engine oil circulation according to claim 1, wherein the housing (1) is further radially provided with a first oil drain hole (14), the valve body (2) is further radially provided with a third communicating oil port (24), an outer wall of the valve body (2) is provided with a fifteenth communicating oil port (217), and the first oil drain hole (14) is communicated with the third communicating oil port (24) via the fifteenth communicating oil port (217).

4. The energy-saving engine oil control valve with internal engine oil circulation according to claim 1, wherein the housing (1) is further radially provided with a second oil drain hole (15), the valve body (2) is further radially provided with a tenth communicating oil port (212) and a twelfth communicating oil port (214), and an outer wall of the valve body (2) is provided with an eleventh communicating oil port (213) between the tenth communicating oil port (212) and the twelfth communicating oil port (214); the second oil drain hole (15) is communicated with the eleventh communicating oil port (213); when the piston (3) is in the first state, the second annular oil groove (34) is communicated with the tenth communicating oil port (212); and when the piston (3) is in the second state, the fourth annular oil groove (37) is communicated with the twelfth communicating oil port (214).

5. The energy-saving engine oil control valve with internal engine oil circulation according to claim 1, wherein an inner wall of the housing (1) is provided with a limit groove (16) at an end where the mounting port is located, a limit clamp (10) is mounted in the limit groove (16), and the housing (1) is provided with a limit flange (17) at the first oil inlet (11).

6. The energy-saving engine oil control valve with internal engine oil circulation according to claim 5, wherein a filter screen assembly (4) is mounted between the flange (17) and the valve body (2).

7. The energy-saving engine oil control valve with internal engine oil circulation according to claim 1, wherein the fifth communicating oil port (27) and the seventh communicating oil port (29) are both slot-shaped through holes.

8. The energy-saving engine oil control valve with internal engine oil circulation according to claim 1, wherein the third annular oil groove (35) is located between the second annular oil groove (34) and the fourth annular oil groove (37).

9. The energy-saving engine oil control valve with internal engine oil circulation according to claim 1, wherein the valve body (2) and the piston (3) are both hollow structures with one end opened and the other end closed, an inner wall of the closed end of the valve body (2) is provided with a return spring mounting base (25), the closed end of the piston (3) is provided with a return spring mounting seat (31), and a return spring (6) is mounted between the return spring mounting base (25) and the return spring mounting seat (31).

10. The energy-saving engine oil control valve with internal engine oil circulation according to claim 1, wherein an end of an outer wall of the valve body (2) near the first oil inlet (11) is circumferentially provided with a first communicating oil port (23), the outer wall of the valve body (2) is radially provided with a second communicating oil port (22) communicated with the first communicating oil port (23), the outer wall of the piston (3) is further provided with a first annular oil groove (32) and a second oil inlet (33), the second oil inlet (33) communicates the first annular oil groove (32) with the hollow inner cavity of the piston (3), and a hollow inner cavity in the piston (3) that communicates the second oil inlet (33) with the fourth oil inlet (36) is the third oil inlet (310); and
the first oil inlet (11), the first communicating oil port (23), the second communicating oil port (22), the first annular oil groove (32), the second oil inlet (33), the third oil inlet (310), the fourth oil inlet (36) and the third annular oil groove (35) are all in a constant communicated state when the piston (3) is in any state.

11. The energy-saving engine oil control valve with internal engine oil circulation according to claim 1, wherein the first oil inlet (11) is communicated with the fourth oil inlet (36) and mounted with an oil inlet check valve.

12. The energy-saving engine oil control valve with internal engine oil circulation according to claim 11, wherein an open end of the piston (3) is axially provided with a plug mounting hole (38), a plug (9) is press-fitted into the plug mounting hole (38) with an interference fit, the piston (3) is provided with a check valve disc mounting seat (39) between the fourth oil inlet (36) and the second oil inlet (33), the oil inlet check valve comprises a check valve disc (7) and a disc check valve spring (8), the check valve disc (7) is mounted on the check valve disc mounting seat (39), and the disc check valve spring (8) is mounted between the plug (9) and the check valve disc (7).

13. An engine system, comprising the energy-saving engine oil control valve with internal engine oil circulation according to any one of claims 1 to 12.
